# EUROPEAN PATENT APPLICATION

(11) **EP 4 324 736 A1**
(43) Date of publication of application: **21.02.2024**
(21) Application number: 22275112.5
(22) Date of filing: 15.08.2022
(51) Int. Cl.: B63B 49/00, B64D 43/00, B64F 5/60, F03B 11/00, G01L 5/13, G01P 5/165, G01M 9/04, F01D 17/08

(54) **APPARATUS FOR FLOW MEASUREMENT**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A flow body unit (600) for a fluid flow rig (10) for simulating fluid flow patterns; the flow body unit (600) comprising: a flow body support frame (700); a core member (800) extending from the flow body support frame (700) along a flow body unit longitudinal axis (630); the core member (800) having a leading edge end (822) and a trailing edge end (824), the core member (800) mounted to the flow body support frame (700) at its trailing edge end (824) such that it extends away from the flow body support frame (700) to terminate at a free end (834) defined by the leading edge end (822).

## Description

### FIELD

The present disclosure relates to apparatus for flow measurement.

In particular the disclosure is concerned with a rake assembly and/or parts thereof for enabling measurement of fluid flow parameters in a fluid flow rig.

### BACKGROUND

Intake rakes are devices used as part of wind tunnel intake testing to provide measurement of flow parameters, for example at intake to engines. The rakes are pressure measuring devices which are positioned at a simulated engine face within a scaled intake model.

Typically rakes with probes are fixed in position within a flow chamber. Hence measurements are typically taken in fixed locations, and hence part of the flow is unmeasured. Increasing the number of rakes increases the number of locations at which measurements can be made, but increases the flow blockage and alters the flow characteristics. Conventionally, to reduce the effect of flow blockage, other features of the engine are left out of the model, for example a central flow bullet. However, this omission also adversely effects the pattern of the flow.

Any maintenance or adjustment to the rakes or probes attached thereto requires significant dismantling and disturbance to the set up of all the rakes and associated instrumentation. After reassembly extensive retests are then required to ensure the whole rake system has been correctly reinstated and connected.

Conventional rakes are all single function (e.g. measuring for Distortion, Performance and Swirl data) and so getting a full map of the flow characteristics of a region requires the different rakes to be swapped around during test, requiring test conditions to be repeated in order to obtain the desired measurements.

Hence a flow measurement apparatus which enables greater versatility on the number, type and location of rakes present, reduces the effect of flow blockage and simplifies maintenance and configuration, is highly desirable.

### SUMMARY

According to the present disclosure there is provided an apparatus and method as set forth in the appended claims. Other features of the invention will be apparent from the dependent claims, and the description which follows.

Accordingly there may be provided a rake assembly (100) for measuring fluid flow parameters in a fluid flow rig (10), the rake assembly (100) comprising: a housing (102) comprising a wall (104) which defines a flow passage (110), with a flow inlet (112) and a flow outlet (114), the flow passage (110) extending from the flow inlet (112) to the flow outlet (114); wherein the housing wall (104) defines an access aperture (106); and the housing (102) configured to define an Aerodynamic Instrument Plane (AIP) at, or part of the way downstream of, the flow inlet (112); an instrumentation arm (120) which extends from a leading edge end (122) to a trailing edge end (124) and configured to be removably mounted to the housing (102); wherein the instrumentation arm (120) is operable such that, when mounted to the housing wall (104) the instrumentation arm (120) extends through the access aperture (106) to extend at least part of the way across the flow passage (110), the access aperture (106) and instrumentation arm (120) sized so that: the instrumentation arm (120) can be removed from the casing wall (104) by drawing the instrumentation arm (120) through the access aperture (106); and the instrumentation arm (120) can be installed on the casing wall (104) by inserting the instrumentation arm (120) through the access aperture (106).

The housing (102) may be cylindrical and may be centred on a longitudinal axis (130).

The access aperture (106) may be elongated, extending along the housing wall (104) in alignment with the longitudinal axis (130), the access aperture (106) spaced apart from the inlet (112) and outlet (114) ends of the housing (102).

The instrumentation arm (120) may comprise a mount end (136) configured to be mounted to the housing (102), and a free end (134) distal to the mount end (136) which, in use, is located in the flow passage (110).

The instrumentation arm (120) may comprise a probe (200) with a free end (234) which defines a part of a leading edge end (222) of the probe (200), the probe (200) extending from the leading edge end (222) to a trailing edge end (224), the leading edge end (222) of the probe (200) being located in the Aerodynamic Instrument Plane (AIP).

The instrumentation arm (120) may comprise a plurality of probes (200), each with a free end (234) which defines a part of a leading edge end (222) of the probe (200), each probe (200) extending from the leading edge end (222) to a trailing edge end (224).

The instrumentation arm (120) may comprise a probe mount (202) wherein: the probe mount (202) extends from the instrumentation arm mount (132) between the mount end (136) and the instrumentation arm free end (134), and the or each probe (200) extends from the probe mount (202).

The housing wall (104) may define a plurality of access apertures (106) spaced apart around the circumference of the housing wall (104).

The rake assembly (100) may further comprise a plurality of instrumentation arms (120), each fitted in a different access aperture (106), and configured to be installed and removed independently of the others.

The rake assembly (100) may further comprise an instrumentation cable (240) and/or tube (242) for coupling to the/each probe (200); wherein the external surface (150) of the housing wall (104) comprises a first recess (152) adjacent to the access aperture (106), the first recess (152) extending at least part of the way around the housing wall (104), and configured to locate the instrumentation cable (240) and/or tube (242).

The rake assembly (100) may comprise a plurality of instrumentation cables (240) and/or tubes (242) for coupling to the/each probe (200); wherein the first recess (152) is configured to locate the instrumentation cables (240) and/or tubes (242).

The housing wall may further comprise: a second recess (154) at the inlet (112) of the flow passage (110); and an adapter intake ring (300) configured to fit within the second recess (154); the adapter intake ring (300) having an external surface (302) for engagement with the housing wall second recess (154); and an inner surface (304) which defines a flow surface; the adapter intake ring (300) further configured to fit to an intake nozzle (400), the inner surface (304) of the adapter intake ring (300) provided between nozzle flow surface (404) from the nozzle (400) to an inner flow surface (116) of the housing wall (104).

A second recess (154) may extend from the flow inlet (112) end and terminates at the Aerodynamic Instrument Plane (AIP).

There may also be provided a rake assembly (100) for measuring fluid flow parameters in a fluid flow rig (10), the rake assembly (100) comprising : a rake assembly support frame (500); a housing (102) mounted on the rake assembly support frame (500); the housing (102) comprising a wall (104) which defines a flow passage (110), with a flow inlet (112) and a flow outlet (114), the flow passage (110) extending from the flow inlet (112) to the flow outlet (114); wherein the housing (102) is cylindrical and is centred on a longitudinal axis (130); an instrumentation arm (120), wherein the instrumentation arm (120) extends from a leading edge end (122) to a trailing edge end (124), and the instrumentation arm (120) extends from the housing wall (104) to extend at least part of the way across the flow passage (110), the leading edge end (122) located in an Aerodynamic Instrument Plane (AIP); the housing (102) being rotatably mounted to the rake assembly support frame (500); such that the housing (102) and instrumentation arm (120) are operable to rotate at least part of the way around the longitudinal axis (130).

The housing (102) may comprise a bearing land (160) on its external surface to engage with the rake assembly support frame (500). The support assembly (500) may comprise a first bracket (502) and a second bracket (504) which define a support interface (506), the support interface (506) extending around the housing (102); the support interface (506) configured to rotatably support the bearing land (160) such that the housing (102) bearing land (160) is rotatable relative to the support interface (506).

The support interface (506) may comprise a rotatable bearing (508).

The support interface (506) may comprise a low friction surface (510) for direct contact with the housing (102) bearing land (160).

The rake assembly (100) may further comprise an actuator (512) coupled to the housing (102) and operable to drive the housing (102) around the longitudinal axis (130).

The rake assembly (100) may further comprise a control system (514) configured to control the actuator (512) to control the rotational speed of the housing (102) and/or control angular location of the instrumentation arm (120).

The control system (514) may be configured to control the actuator (512) to drive the housing (102) around the longitudinal axis (130) at a constant angular speed at least part of the way around the longitudinal axis (130).

The control system (514) may be configured to control the actuator (512) to drive the housing (102) around the longitudinal axis (130) between a first angular position (P1) and a second angular position (P2).

There may also be provided a method of operation of a rake assembly (100) for measuring fluid flow parameters in a fluid flow rig (10), the rake assembly (100) comprising : a rake assembly support frame (500); a housing (102) mounted on the rake assembly support frame (500); the housing (102) comprising a wall (104) which defines a flow passage (110), with a flow inlet (112) and a flow outlet (114), the flow passage (110) extending from the flow inlet (112) to the flow outlet (114); wherein the housing (102) is cylindrical and is centred on a longitudinal axis (130); an instrumentation arm (120), wherein the instrumentation arm (120) extends from the housing wall (104) to extend at least part of the way across the flow passage (110); the housing (102) being rotatably mounted to the rake assembly support frame (500); such that the housing (102) and instrumentation arm (120) are operable to rotate at least part of the way around the longitudinal axis (130); the method comprising rotating the housing (102) at least part of the way around the longitudinal axis (130).

The rake assembly (100) may further comprise an actuator (512) coupled to the housing (102) and operable to drive the housing (102) around the longitudinal axis (130), and a control system (514) configured to control the actuator (512) to control the rotational speed of the housing (102) and/or angular location of the instrumentation arm (120); the method comprising operating the control system (514) to control the actuator (512) to rotate the rake assembly support frame (500) at least part of the way around the longitudinal axis (130) between a first angular position (P1) and a second angular position (P2).

There may also be provided a method of operation of a fluid flow rig (10) comprising the method of operation of a rake assembly (100) according to the present disclosure and comprising the steps of: positioning the housing (102), and hence the instrumentation arm (120) at the first angular position (P1); delivering a fluid flow to the inlet of the housing (102); rotating the housing (102) at least part of the way around the longitudinal axis (130) such that the instrumentation arm (120) is at the second angular position (P2); measuring properties of the fluid flow using the instrumentation arm (120) at the second angular position (P2).

The method of operation of a fluid flow rig (10) may further comprise the step of: positioning the housing (102), and hence the instrumentation, with no fluid flow being delivered to the inlet of the housing (102).

The method of operation of a fluid flow rig (10) may further comprise the step of delivering fluid flow to the inlet of the housing (102) while the housing (102) is rotated around the longitudinal axis (130).

There may also be provided a flow body unit (600) for a fluid flow rig (10) for simulating fluid flow patterns; the flow body unit (600) comprising: a flow body support frame (700); a core member (800) extending from the flow body support frame (700) along a flow body unit longitudinal axis (630); the core member (800) having a leading edge end (822) and a trailing edge end (824), the core member (800) mounted to the flow body support frame (700) at its trailing edge end (824) such that it extends away from the flow body support frame (700) to terminate at a free end (834) defined by the leading edge end (822).

In the direction from the core member leading edge end (822) to the core member trailing edge end (824), the core member (800) may comprise :
a first region (830) of the flow body increases in diameter from a point at the core member leading edge end (822) to a second region (832);
the second region (832) extends towards the core member trailing edge end (824) to a third region (834), the second region (832) increasing in diameter at a gradually reducing rate as the distance from the core member leading edge end (822) increases;
the third region (834) extends towards the core member trailing edge end (824) to a fourth region (836), the third region (834) reducing in diameter as the distance from the core member leading edge end (822) increases;
the fourth region (836) extends towards the core member trailing edge end (824) to a fifth region (838), the fourth region (836) having a constant diameter as the distance from the core member leading edge end (822) increases;
the fifth region (838) extends towards the core member trailing edge end (824) to a sixth region (840), the fifth region (840) increasing in diameter at a gradually reducing rate as the distance from the core member leading edge end (822) increases;
the sixth region (840) extends towards the core member trailing edge end (824), the sixth region (840) reducing in diameter as the distance from the core member leading edge end (822) increases.

The flow body support frame (700) may comprise: a base member (710) configured to be mounted to a housing (102); the base member (710) defining an aperture (712) centred on the flow body unit longitudinal axis (630) the core member (800) centred on, and extending along, the flow body unit longitudinal axis (630) a strut (714) extending from the base member (710) to the core member (800).

A plurality of struts (714) may extend from the base member (710) to the core member (800); the struts (714) being spaced apart from one another around the flow body unit longitudinal axis (630) to define a flow passages (730) between the struts (714).

The/each strut (714) may comprise an aerofoil profile (716).

There may also be provided a rake assembly (100) for measuring fluid flow parameters in a fluid flow rig (10), the rake assembly (100) comprising: a housing (102) comprising a wall (104) which defines a flow passage (110), with a flow inlet (112) and a flow outlet (114), the flow passage (110) extending from the flow inlet (112) to the flow outlet (114); wherein the housing wall (104) defines an access aperture (106); an instrumentation arm (120) which extends from a leading edge end (122) to a trailing edge end (124) and configured to be removably mounted to the housing (102); wherein the instrumentation arm (120) is operable such that, when mounted to the housing wall (104) the instrumentation arm (120) extends through the access aperture (106) to extend at least part of the way across the flow passage (110); and further comprising a flow body unit (600) according to the present disclosure mounted to the housing (102) such that the flow body unit longitudinal axis (630) is aligned with the housing longitudinal axis (130), and such that the first region (830) of the core member (800) is provided upstream of the leading edge end (122) of the instrumentation arm (120).

Hence there is provided a flow measurement apparatus which enables greater versatility on the number, type and location of rakes (i.e. instrumentation arms) present, reduces the effect of flow blockage and simplifies maintenance and configuration.

### BRIEF DESCRIPTION OF THE FIGURES

Embodiments of the invention will now be described by way of example only with reference to the figures, in which:
Figure 1 shows a view of a fluid flow rig which comprises a rake assembly according to the present disclosure;
Figure 2 shows a view of an alternative example of a rake assembly according to the present disclosure;
Figure 3 shows the rake assembly of figure 1 with some components removed;
Figure 4 shows the rake assembly of figure 2 with some further components removed;
Figure 5 is an exploded view of an example of the rake assembly of the present disclosure;
Figure 6 shows a cross-section through the rake assembly;
Figures 7, 8 illustrate a rotation of the rake assembly;
Figures 9 to 11 show the fitting of an instrumentation arm of a rake assembly according to the present disclosure;
Figures 12 to 14 show views of a mount end of the instrumentation arm and the associated instrumentation;
Figures 15, 16 are further views of parts of the rake assembly;
Figure 17 to 20 show examples of the rake assembly with different nozzle arrangements;
Figures 21, 22 illustrates technical benefits of an example of the present disclosure.

### DETAILED DESCRIPTION

The present disclosure relates to a rake assembly 100 for measuring fluid flow parameters in a fluid flow rig 10. Typically the fluid is air, although may be a gas or liquid, or combination of the two.

Such rake assemblies 100 are used in the testing of intakes to engines, for example aircraft intakes to ensure that the flow patterns of air entering the fan and compressor are acceptable for successful engine operation. This is often required as the intake may be adjacent a part of the airframe of the aircraft, or at the end of an intake nozzle, and hence likely to be distorted.

Additionally or alternatively, such rake assemblies may be utilised in other applications where fluid flow characteristics within pipelines ducts and generators need to be understood, including the inlets of naturally aspirated internal combustion engines, compressor systems such as turbo units and superchargers, steam power applications, hydroelectric systems, air conditioning systems, heat pumps etc.

Hence a flow duct may be constructed which defines a flow passage 110 having at least one region having the same geometry of the engine intake. A rake assembly 100 according to the present disclosure may be located in the chamber at in the region which modelled on the engine intake. This region, where measurements are taken, is the Aerodynamic Instrument Plane (AIP).

The flow duct may be made smaller than the actual engine intake, albeit to scale. This is because full size wind tunnels are expensive to build, maintain and operate. A rig of smaller size, is more practical. Consequently the flow passage 110 is smaller than in a production version of the engine, which means any rake assembly provided with instrumentation in the flow passage will have a larger effect on flow blockage and/or distortion to the flow, that there is less space to provide the variety of probes required, and less chance of access to the internal space within the flow passage 110 to maintain or replace the probes.

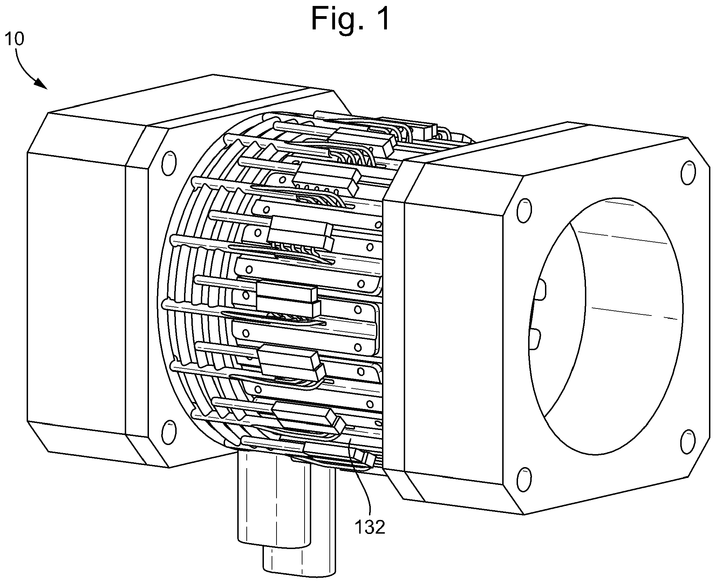

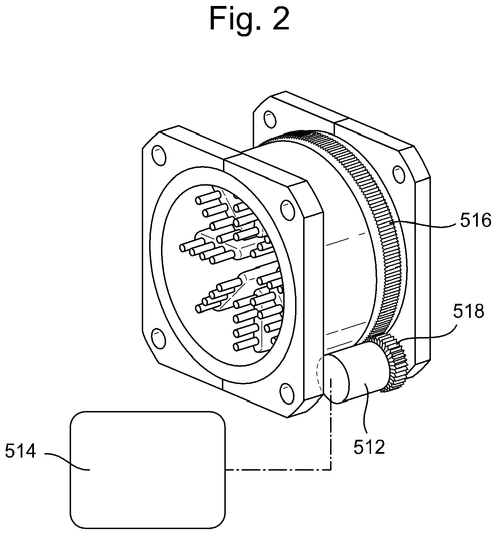

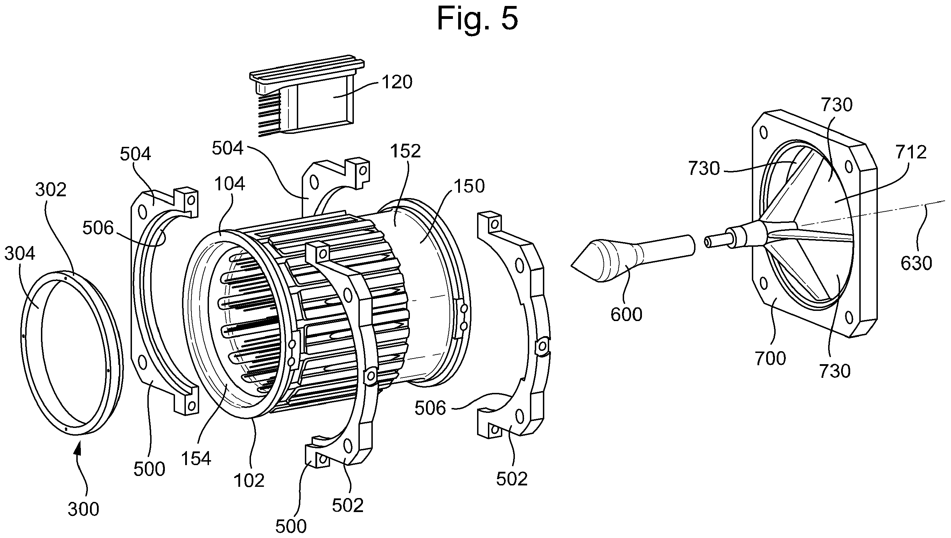

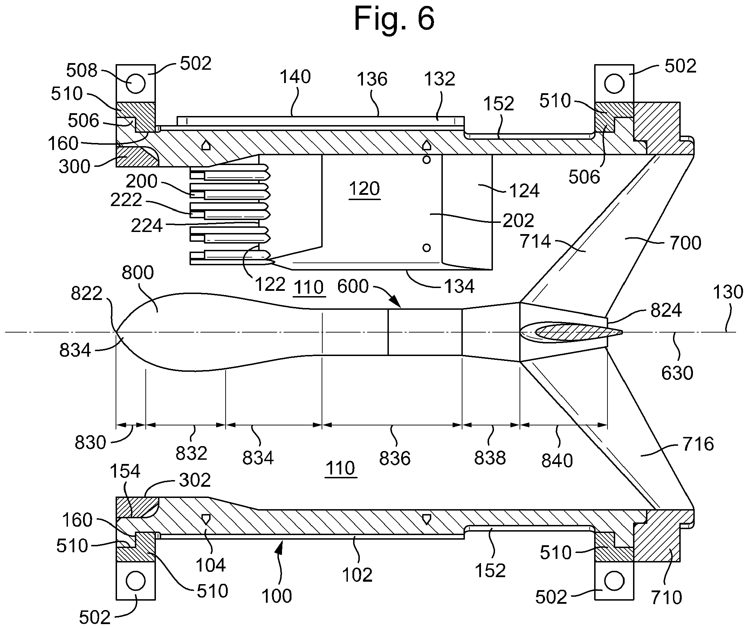

Figure 1 shows an example of a fluid flow rig 10, which comprises a rake assembly 100 of the present disclosure. Figures 2, 3, 4 show examples of the rake assembly 100 with some features removed for clarity to allow for the illustration of other details, as described below. Figure 5 shows an exploded view of the rake assembly 100. Figure 6 shows a part section and side view of an example configuration of the rake assembly 100.

As shown in figures 2, 3, 4, the rake assembly 100 may comprise a housing 102 comprising a wall 104 which defines a flow passage 110. The housing 102 is cylindrical and is centred on a longitudinal axis 130. The housing 102 is configured to define an Aerodynamic Instrument Plane AIP at, part of the way downstream of, the flow inlet 112.

The Engine Aerodynamic Instrument Plane (AIP) is the datum for air flow measurements. At full scale (in a production aircraft) the engine AIP is typically defined as the boundary between the inlet duct and the front face of the engine assembly. For consistency this position is therefore also respected in product development models such as those used in wind tunnels.

In such wind tunnel models the internal geometry of the inlet and inlet duct and exhaust are recreated at a scale suited to the wind tunnel. The engine itself is not normally represented in these induction system tests, instead a measurement device known as an engine face rake takes its place between inlet duct and exhaust.

The instrumentation rake of the rake assembly presents an array of sampling devices on or near to the AIP but crucially in doing so should not impose a significant blockage to the transient fluid flow as this could cause non representative results to be taken.

The air inlet at the engine AIP of a typical axial flow jet engine is invariably circular however due to the often convoluted route from the external intake to the internal engine the duct shape immediately ahead of the engine is not always of cylindrical form. For a valid test it is essential to recreate such features as closely as possible in the scale model.

The inlet of a full scale engine casing is invariably circular however the inlet duct ahead of this is not always of cylindrical form. Furthermore the duct exit and hence the duct exit flow is typically but not always aligned to the axis of the engine rake. If in such cases the AIP were not positioned close to the duct to rake interface this would likely lead to inconsistent data.

The flow passage 110 defines a flow inlet 112 and a flow outlet 114, the flow passage 110 extends from the flow inlet 112 to the flow outlet 114. The housing wall 104 defines at least one access aperture 106.

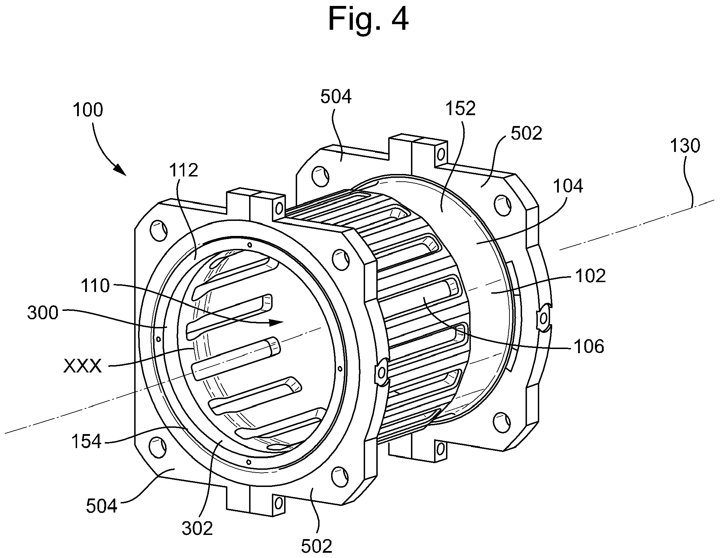

As shown in figure 4, the access aperture 106 is elongated, extending along the housing wall 104 in alignment with (i.e. parallel to) the longitudinal axis 130, the access aperture 106 spaced apart from the inlet 112 and outlet 114 ends of the housing 102.

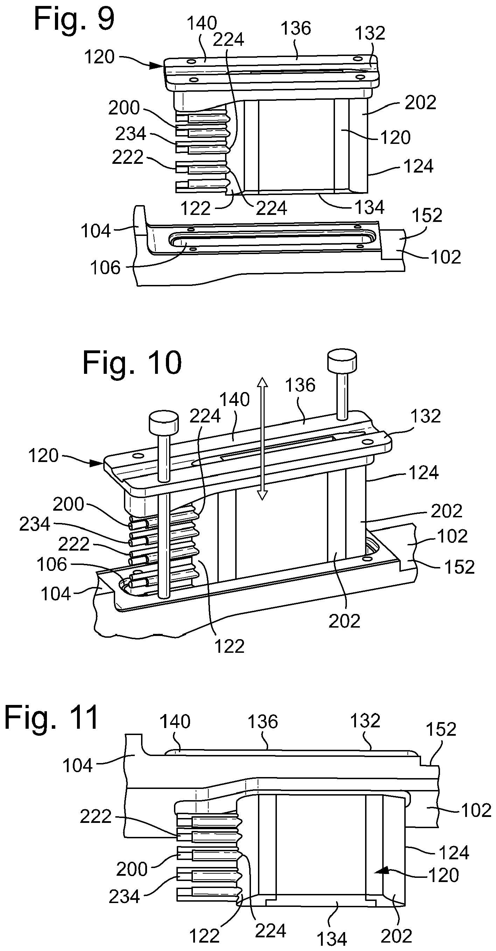

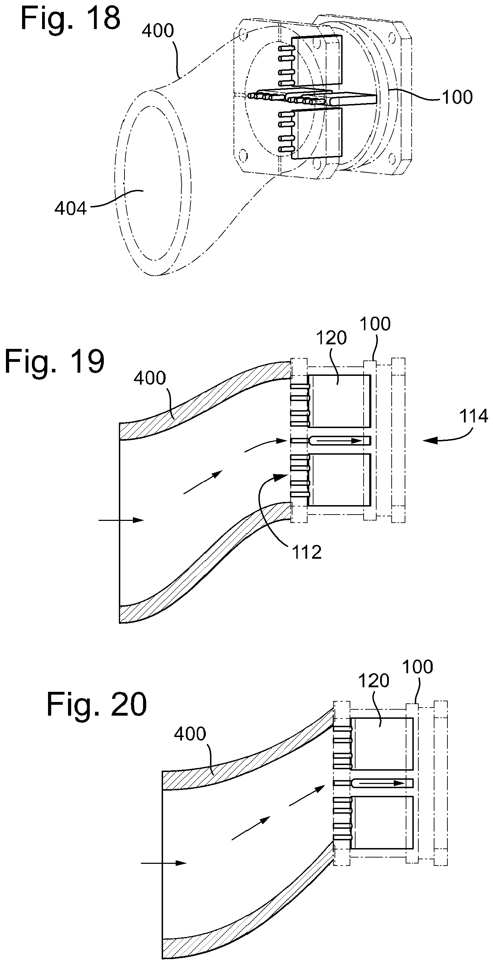

As shown in figures 5, 6, 9 to 11, the rake assembly 100 may comprise an instrumentation (or rake) arm 120. As illustrated in figures 9 to 100, the instrumentation arm 120 extends from a leading edge end 122 to a trailing edge end 124. The instrumentation arm 120 is configured to be removably mounted to the wall 104 of housing 102.

The instrumentation arm 120 is operable such that, when mounted to the housing wall 104 the instrumentation (or rake) arm 120 extends through the access aperture 106 to extend at least part of the way across the flow passage 110. The instrumentation (or rake) arm 120 may extend radially. The instrumentation arm 120 may extend at 30% but no more than 50% of the way across the flow passage 110. The instrumentation arm 120 may extend all of the way across the flow passage 110.

As shown in figures 9 to 11, the access aperture 106 and instrumentation arm 120 are sized and shaped (i.e. configured or arranged) so that the instrumentation arm 120 can be removed from the casing wall 104 by drawing the instrumentation arm 120 through the access aperture 106. The access aperture 106 and instrumentation arm 120 are sized and shaped (i.e. configured or arranged) so that the instrumentation arm 120 can be removed from the casing wall 104 (i.e. housing 102) by drawing the instrumentation arm 120 through the access aperture 106 in a radial direction and/or inserted in to the casing wall 104 (i.e. housing 102) in a radial direction. Thus removal/insertion only requires the instrumentation arm to be translated in a single dimension (e.g. perpendicular to the longitudinal axis 130), which provides inherent protection of the probes.

As shown in figures 9 to 11, the access aperture 106 and instrumentation arm 120 are also sized and shaped so that the instrumentation arm 120 can be installed on the casing wall 104 by inserting the instrumentation arm 120 through the access aperture 106.

Hence the access aperture 106 has a cross-sectional shape which corresponds to the cross-sectional shape of the instrumentation arm 120. Put another way, when the instrumentation arm 120 is fitted to the housing 102 there may be an interference fit or small clearance between the perimeter of the instrumentation arm 120 and the edge of the access aperture 106.

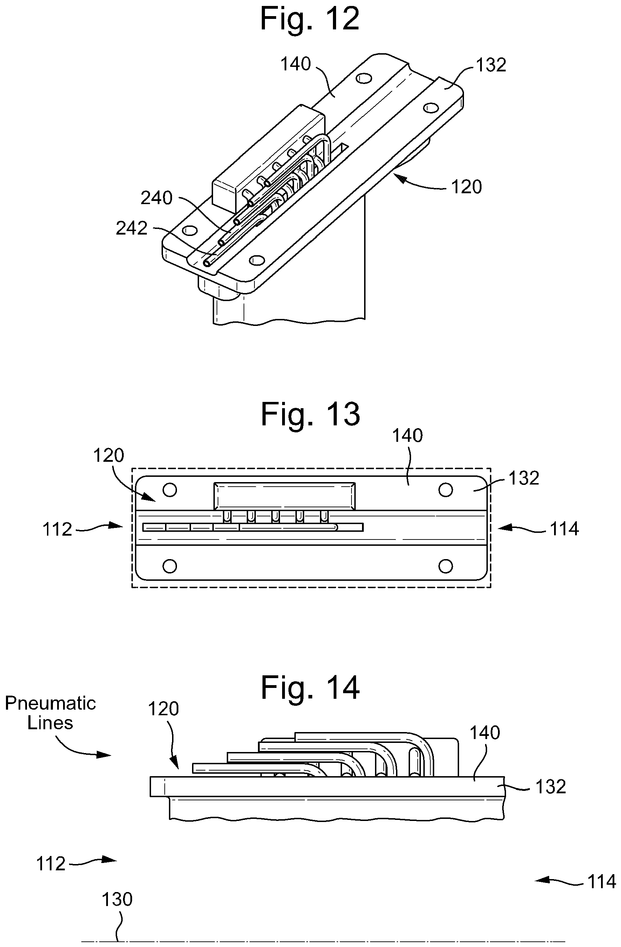

As shown in figures 6, 9 to 11, the instrumentation arm 120 may comprise a mount end 136 configured to be mounted to the housing 102, and a free end 134 distal to the mount end 136 which, in use, is located in the flow passage 110. As shown in figures 12 to 14, the mount end 136 may be provided as flange or plate 140 which extends laterally outwards from the instrumentation arm 120 so that when the instrumentation arm 120 is fitted in the access aperture 106, the flange 140 covers the access aperture 106, and hence prevents the instrumentation arm 120 from falling into the flow chamber. The flange 140 may be bolted to the housing 102, for example via bolt hole provided in the flange and tappings in the housing 102. Thus the instrumentation arm can be slid into the access aperture 106 and removed from the access aperture 106.

The instrumentation arm 120 may comprise a probe 200 with a free end 234 which defines a part of a leading edge end 222 of the probe 200, the probe 200 extending from the leading edge end 222 to a trailing edge end 224.

The leading edge end 222 of the probe 200 may be located in the Aerodynamic Instrument Plane AIP.

The instrumentation arm 120 may comprise a plurality of probes 200, each with a free end 234 which defines a part of a leading edge end 222 of the probe 200, each probe 200 extending from the leading edge end 222 to a trailing edge end 224, and located in the Aerodynamic Instrument Plane AIP.

The instrumentation arm 120 defines a probe mount 202. The probe mount 202 extends from the instrumentation arm mount 132 between the mount end 136 and the instrumentation arm free end 134. The or each probe 200 extends from the probe mount 202. Hence, when installed in the housing 102, the or each probe 200 extends from the probe mount 202 towards the housing 102 flow inlet 112. Hence the instrumentation arm 120 comprises the probe mount 202 and the or each probe 200.

In some examples housing wall 104 defines a plurality of access apertures 106 spaced apart around the circumference of the housing wall 104. In some examples there may be provided a plurality of instrumentation arms 120, each fitted in a different access aperture 106, and configured to be installed and removed independently of the others.

As shown in figures 12 to 14, there may also be provided an instrumentation cable 240 and/or tube 242 for coupling to the/each probe 200 (as required, depending on the nature of the probe). As shown in Figures 6, 9 to 11, the external surface 150 of the housing wall 104 may comprise a first recess 152 adjacent to the access aperture 106, the first recess 152 extending at least part of the way around the housing wall 104, and configured to locate the instrumentation cable 240 and/or tube 242.

In some examples there may be provided a plurality of instrumentation cables 240 and/or tubes 242 for coupling to the/each probe 200. The first recess 152 may be configured to locate each/all instrumentation cables 240 and/or tubes 242. Hence the first recess 152 is a space in which the cables 240 and/or tubes 242 are located, the walls of the recess acting as guides. In some examples, the recess 152 is open so as to enable easy access for maintenance.

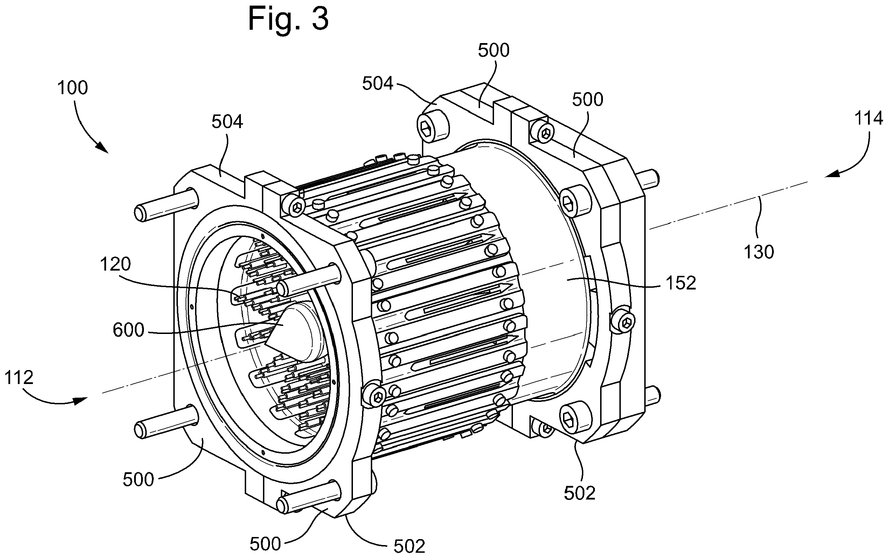

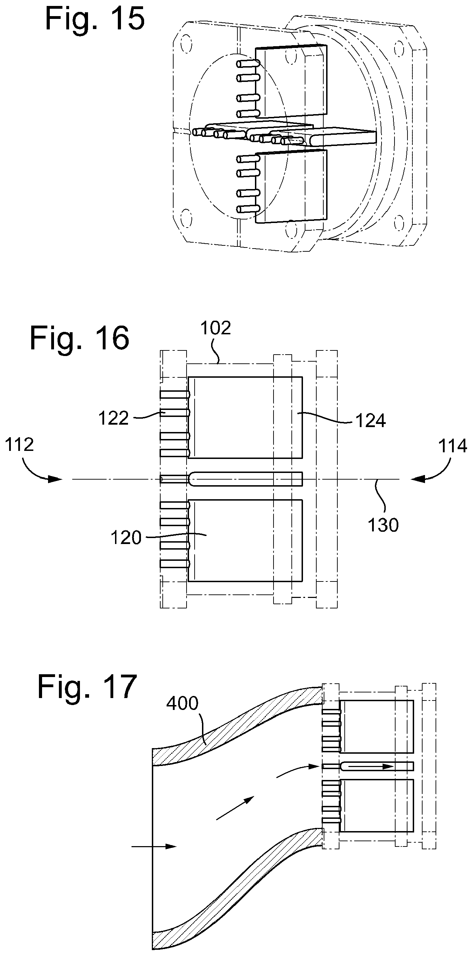

As shown in figures 3 to 6, the housing wall 104 may further comprise a second recess 154 at the inlet 112 of the flow passage 110. The rake assembly 100 may further comprise an adapter intake ring 300 configured to fit within the second recess 154. The adapter intake ring 300 may have an external surface 302 for engagement with the housing wall second recess 154, and an inner surface 304 which defines a flow surface. The adapter intake ring 300 is configured to fit to an intake nozzle 400 (as illustrated in figures 17 to 20), the inner surface 304 of the adapter intake ring 300 provided between nozzle flow surface 404 from the nozzle 400 to an inner flow surface 116 of the housing wall 104.

The second recess 154 may extend from the flow inlet 112 end and terminates marginally upstream of, or at, the Aerodynamic Instrument Plane (AIP).

As shown in figures 12, 13, 14, to support modularity each instrumentation arm 120 should be equipped with a common interconnection. This interface enables the quick and reliable connection of both the electrical 240 and pneumatic 242 content of the instrumentation arm 120. The connection (and disconnection) is configured to be possible with minimal disruption to the adjacent circuitry on the rake housing.

Critically, this connection should be made within the smallest space envelope possible, ideally this should not exceed the planform of the arm header (i.e. mount 132) as this will improve and expedite interchangeability. Furthermore the height of the interconnection should be kept to a minimum as this will likely be located at and dictate the outermost extremity of the rake assembly.

In figures 12, 13, 14 pneumatic lines 242 are shown terminated in a simple staggered form to facilitate individual sleeved connections to be made whist minimising bulk volume. Electrical connection is made in a micro connector fixed to the arm header. To achieve the modularity goals, any alternative connection solutions that may be exploited should also adhere to the basic space constraints outlined here.

A flexible interconnection is then located on the rake housing 102 for each arm 120 position. Having an interconnection point or 'plug break' in this vicinity negates the need to unpick the tube and wiring routes from the massed bundle each time an arm is removed for maintenance.

In conventional rakes it is common to find that the associated wiring and pneumatic lines are routed around the rake passing over the head of adjacent arms. In the arrangement of the present disclosure, provision for the wires 240 and tubes 242 has been made by extrapolating the rake housing aft to produce an annular gallery, in this case downstream of the arms 120.

The combined bundle of wires and tubes may therefore be formed in a logical fashion such that they emerge from the rake as a single (or multiple) umbilical at a position to suit the model. The umbilical being terminated at an appropriate length with connection media to suit the application.

Static pressure measurement locations may be been positioned at a sufficient distance from rake arms and probe tips to reduce any upstream effects.

Hence the way in which each instrumentation arm 120 is mounted to the housing 102 enables them to be swapped in and out as required without disturbing/removing another instrumentation arm 120 or having to dismantle the rig assembly. The addition of recess 152 also provides for safe packaging of associated wiring 240 and/or pipes 242 and route them onto the rake housing 102 within the prescribed space envelope.

The mount 132 is common to all instrumentation arms 120. Hence they can be fitted in any position within the housing 102. Also they enable transition in one simple axis to minimise potential clashes that could expose the highly sensitive calibrated probes to potential damage, this transition can be controlled along a simple guide tool (e.g. blue bolts). Spare instrumentation arms 120 can be pre assembled and can be exchanged for any arm at any position. Additionally the can be replaced with blanks (singularly or as a complete set) or toinclude different instrumentation for measuring different physical properties. Also they may have sufficient margin to be modified or reproduced to meet future requirements such as differing sensor configurations.

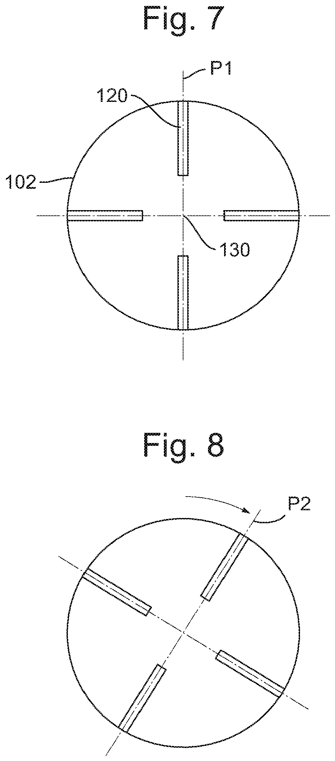

Additionally or alternatively the rake assembly 100 may comprise a rake assembly support frame 500. This is illustrated in figures 3 to 6. The housing 102 may be rotatably mounted to the rake assembly support frame 500 such that the housing 102 and instrumentation arm 120 are operable to rotate at least part of the way around the longitudinal axis 130, as illustrated in figures 7, 8. This may be configured to enable mechanical free rotation though 360 degrees to support fault finding or alternative/future unknown model configurations. Once assembled and tubed / wired up the rotation becomes restricted.

The support frame 500 comprises a first bracket 502 and a second bracket 504 which define a support interface 506, the support interface 506 extending around the housing 102. The housing 102 may comprise a bearing land 160 on its external surface for engagement with the rake assembly support frame 500. The support interface 506 may be configured to rotatably support the bearing land 160 such that the housing 102 bearing land 160 is rotatable relative to the support interface 506.

The brackets 502, 504 form clamp-halves which each extend around a part of the circumference of the housing 102. For example the brackets 502, 504 each extend halfway around the housing 102, such that when the brackets 502, 504 are joined to one another, the bracket assembly 500 bounds the housing 102 to support the housing 102 around its entire circumference. There may also be provided with a locking means to fix the housing 102 in position. The locking means may comprise a dowel which extends through at least one of the brackets 502, 504 and into an aperture on the surface of the housing 102. However any suitable locking means to fix the angular position of the housing 102 around the longitudinal axis 130 may be used. The locking means may be manually operated by a user (i.e. non mechanised). The locking means may be remotely actuated so that the housing can be rotated around the longitudinal axis 130 without the need for a user to manually remove and install the locking means at different angular positions.

The support interface 506 may comprise a rotatable bearing 508. That is to say, the brackets 502, 504 may comprise a rotatable bearing which bears on the housing 102, or a rotatable bearing 508 is provided between the brackets 502, 504 and the housing 102. Additionally or alternatively the support interface 506 may comprise a low friction member 510 (which provides a low friction surface) for direct contact with the housing 102 bearing land 160. As shown in figure 6 the low friction member 510 may be located between the rotatable bearing 508 and the housing 102. In other examples, where no rotatable bearing is present, the low friction member may be provided between the brackets 502, 504 the housing 102.

As shown in figure 2, the rake assembly 100 may further comprise an actuator 512 coupled to the housing 102 and operable to drive the housing 102 around the longitudinal axis 130.

The actuator 512 may comprise a rotatable gear 518 driven by a motor, and the gear 518 is engaged with a gear surface on the housing 102 such that the actuator 512 may drive the housing 102 around the longitudinal axis 130. The actuator may driving re-engage with the housing 102 in any appropriate way, for example instead of gears there may be provided a belt drive or they wheel driven by a motor from the actuator 512 is frictionally engaged with the housing 102.

As illustrated in figure 2, the rake assembly 100 may further comprise a control system 514 configured to control the actuator 512 to control the rotational speed of the housing 102 and/or control angular location of the instrumentation arm 120.

The control system 514 is configured to control the actuator 512 to drive the housing 102 around the longitudinal axis 130 at a constant angular speed at least part of the way around the longitudinal axis 130.

The control system 514 may be configured to control the actuator 512 to drive the housing 102 around the longitudinal axis 130 between a first angular position (P1) and a second angular position (P2).

As illustrated in figure 7, 8, in use the actuator 512 may be operated to rotate the housing 102 at least part of the way around the longitudinal axis 130. That is to say, the actuator 512 may be operated to rotate the housing 102 all of the way around the longitudinal axis 130 (i.e. complete a full revolution).

Alternatively, or additionally, the actuator 512 may be operated to rotate the housing 102 part of the way, but not the whole way, around the longitudinal axis 130. Hence, in use, the control system 514 may be operated to control the actuator 512 to rotate the rake assembly support frame 500 at least part of the way around the longitudinal axis 130 between a first angular position P1 and a second angular position P2.

Figure 7 shows an end on representation of the housing 102 with an instrumentation arm 120 at the 12 o'clock, 3 o'clock, 6 o'clock and 9 o'clock positions. This may be defined as the first angular position P1.

Figure 8 shows the same arrangement shown in figure 7, with the housing 102 rotated clockwise such that the instrumentation arms 120 have been moved around the longitudinal axis 130. This may be defined as the second angular position P2.

The second angular position P2 may be such that the instrumentation arms 120 halfway between the original position of adjacent implementation arms 120 (as illustrated in the example of figure 8). In this way, it is possible to take measurements around the whole circumference of the flow area defined by the flow passage 110 without having to rotate the rakes/instrumentation arms 120 around the whole circumference.

In use the rake assembly may be operated such that the control system 514 is operated to control the actuator 512 to position the housing 102, and hence the instrumentation arm 120, at a first angular position P1 while a fluid flow is being delivered to the inlet of the housing 102 or when no fluid flow is being delivered to the inlet of the housing 102. That is to say, the rake assembly may be operated such that, when a fluid flow is being delivered to the inlet of the housing 102 or when no fluid flow is being delivered to the inlet of the housing 102, the control system 514 may be operated to control the actuator 512 to rotate the housing 102 at least part of the way around the longitudinal axis 130 such that the instrumentation arm 120 is moved from a first angular position P1 to a second angular position P2, such that properties of the fluid flow may be measured using the instrumentation arm 120 at the second angular position P2.

In use the rake assembly may be operated such that the control system 514 is operated to control the actuator 512 to position the housing 102, and hence the instrumentation arm 120, at a first angular position (P1) while a fluid flow is being delivered to the inlet of the housing 102 or when no fluid flow is being delivered to the inlet of the housing 102, and then, when a fluid flow is being delivered to the inlet of the housing 102, the control system 514 may be operated to control the actuator 512 to rotate the housing 102 at least part of the way around the longitudinal axis 130 such that the instrumentation arm 120 is moved from a first angular position P1 to a second angular position (P2), such that properties of the fluid flow may be measured using the instrumentation arm 120 at the second angular position (P2).

The method of operation may comprise the step of positioning the housing 102, and hence the instrumentation, with no fluid flow being delivered to the inlet of the housing 102.

The method of operation may comprise the step of delivering fluid flow to the inlet of the housing 102 while the housing 102 is rotated around the longitudinal axis 130.

Hence the provision of a rotatable housing 102 to move the instrumentation arms 120 around the longitudinal axis allows for full engine face plane measurement. This may be automated in future to allow rake arms to adjust their angular position during a run. This also has the advantage that full engine phase plane measurement can be achieved using a relatively small number of implementation arms 120, and hence overall reduces the flow blockage/disturbance through the flow passage 110.

Mechanising the rotation of the housing enables multiple (even infinite) set points (i.e. angular positions) to be commanded without manual intervention. As such multiple set points can now be reported in a very short time, drastically reducing the cost of the test.

Additionally or alternatively there may be provided a flow body unit (or "bullet") 600. This is configured to fit to the housing 102 to become part of the rake assembly 100. The flow body unit 600 is illustrated in figure 3, 5, 6. The flow body unit 600 may comprise a flow body support frame 700 for attaching to the fluid flow rig 10 and holding the flow body unit 600 in a fixed position relative to the housing 102 of the fluid flow rig 10. The flow body unit 600 may also comprise a core member 800 extending from the flow body support frame 700 along a flow body unit longitudinal axis 630. The core member 800 may have a leading edge end 822 and a trailing edge end 824. The core member 800 may be mounted to the flow body support frame 700 at its trailing edge end 824 such that it extends away from the flow body support frame 700 to terminate at a free end 834 defined by the leading edge end 822. The core body 800 may be removeable from the body support frame 700. The core body 800 and body support frame 700 may be configured so that the core body 800 is removeable from the body support frame 700 without needing to disturb the rake arm 120. For example the core body 800 may be removed from the body support frame 700 by moving it relative to the body support frame 700 along the longitudinal axis 130. Likewise a replacement core body 800 (of the same of different geometry) may be attached to the body support frame 700 without the need to disturb the rake arm 120.

In the direction from the core member leading edge end 822 to the core member trailing edge end 824 along the flow body unit longitudinal axis 630, and as best shown in figure 6, a first region 830 of the flow body increases in diameter from a point at the core member leading edge end 822 to a second region 832. The first region 830 may be conical and change in diameter at a constant rate. The first region 830 may change in diameter at a varying rate (e.g. is curved).

The second region 832 may extend towards the core member trailing edge end 824 to a third region 834, the second region 832 increasing in diameter at a gradually reducing rate as the distance from the core member leading edge end 822 increases. The point where the second region 832 meets the third region 834 may define an inflection.

The third region 834 may extend towards the core member trailing edge end 824 to a fourth region 834, the third region 834 reducing in diameter as the distance from the core member leading edge end 822 increases.

The fourth region 836 may extend towards the core member trailing edge end 824 to a fifth region 838, the fourth region 836 having a constant diameter as the distance from the core member leading edge end 822 increases.

The fifth region 838 may extend towards the core member trailing edge end 824 to a sixth region 840, the fifth region 840 increasing in diameter at a gradually reducing rate as the distance from the core member leading edge end 822 increases.

The sixth region 840 may extend towards, and may terminates at, the core member trailing edge end 824 , the sixth region 840 reducing in diameter as the distance from the core member leading edge end 822 increases.

The flow body support frame 700 may comprise a base member 710 configured to be mounted to a housing 102. The base member 710 may define an aperture 712 centred on flow body unit longitudinal axis 630. The core member 800 may be centred on, and extend along, the flow body unit longitudinal axis 630. A strut 714 may extend from the base member 710 to the core member 800. The strut 714 may extend from the sixth region 840.

A plurality of struts 714 may extend from the base member 710 to the core member 800. Each strut 714 may extend from the sixth region 840. The struts 714 may be spaced apart from one another around the flow body unit longitudinal axis 630 to define a flow passage 730 between the struts 714.

The/each strut 714 may comprise an aerofoil profile 716. The/each strut 714 may define a profile that is faired to minimise upstream effect.

The flow body unit 600 may be mounted to the housing 102 such that the flow body unit 600 longitudinal axis 630 is aligned with the housing 102 longitudinal axis 130.

The flow body unit 600 may be mounted to the housing 102 such that that the first region 830 of the core member 800 is provided upstream of the leading edge end 122 of the instrumentation arm 120.

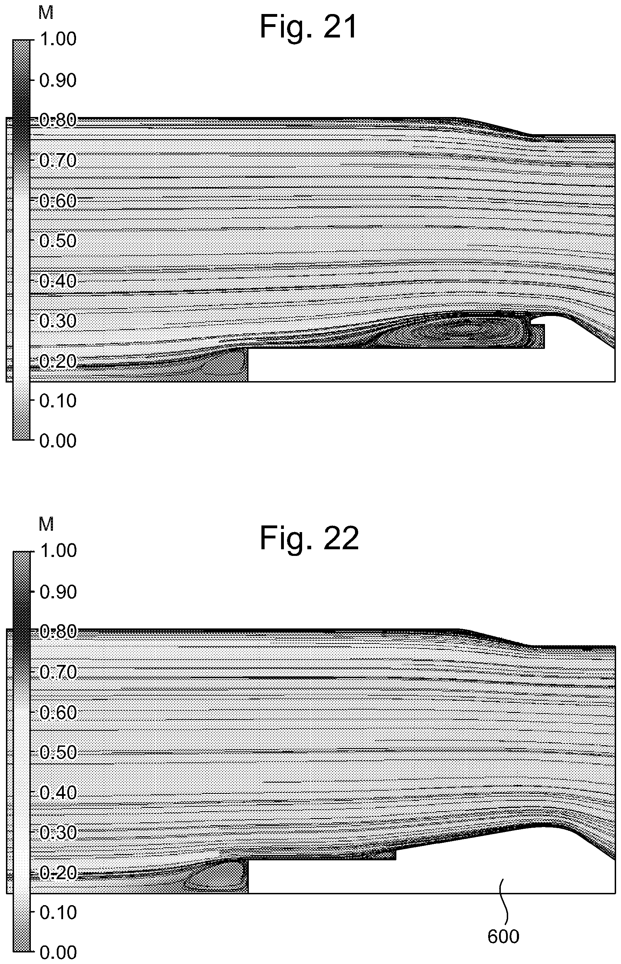

Figures 21, 22 illustrate the benefits of the geometry of the flow body unit 600. In these figures fluid flow is from right to left. Figure 21 shows a design of a flow body unit not according to the present disclosure. Figure 22 shows a flow body unit 600 akin to that of the present disclosure, albeit with some differences. However as can be seen the geometry of the flow body unit 600 downstream of the first region 830, and in particular the second region 832 has a profound effect on the flow area in this region. Hence as can be seen in figure 21 the flow area downstream of the first region 830 is greater than that in the design according to the present disclosure in figure 22.

Hence the geometry of the flow body unit 600, that is to say the change in diameter of the different regions 830, 832, 834, 836, 838, 840 contribute to reducing the flow blockage of the rig assembly 100.

The first region 830 of the flow body unit 600 is configured to be as representative of an intake bullet on an engine as possible.

Blockage (i.e. the reduction in free area relative to the measurement plane area) is one of the biggest challenges faced in rake design. Divergence, increasing the rake diameter to maximise free area, is a key method in reducing blockage.

The positioning of the first region 830 and second region 832 relative to the measurement plane is also important. If the start of the divergence of the first region 830 is located to close to the static pressure measurement plane, this can cause local flow accelerations which have a significant effect on static pressure measurement. If the start of the divergence is located to far aft/downstream, either the angle of the divergence will be too severe resulting in flow separations around the wall or the maximum blockage will occur before the maximum divergence diameter, both of which will severely increase blockage.

If the divergence angle is too severe, the flow will detach from the walls and the effective area will be less than that of the actual Terminating the bullet early (for example as shown in figure 21)

Incorporating a blend (E.g. inflections where the different regions meet) as shown in figure 22 results in a more gradual increase in geometrical area, and as the flow remains attached, also results in an increase in effective area, helping to reduce blockage.

Hence each of the design features - the removable rotation arms 120, the rotatable housing to move the dissertation arms 120 about the longitudinal axis 130 and the flow body unit 600 - enable greater versatility on the number, type and location of rakes (i.e. instrumentation arms) present, reduces the effect of flow blockage and simplifies maintenance and configuration of the flow rig.

The rake assembly 100 of the present disclosure provides versatility on the number, type and location of rakes (and hence measurement locations), reduces the effect of flow blockage and simplifies maintenance and configuration. Hence the apparatus and instrumentation of the present disclosure each contribute to achieving flow of fluid through the rake assembly which is more representative of the flow conditions being simulated than examples of the related art, while also reducing time, expense and resource required to do so.

The features of the rake assembly, in isolation and when combined, provide technical advantages. For example, the rake assembly 100 may include an instrumentation arm 120 can be removed from the casing wall 104 by drawing the instrumentation arm 120 through the access aperture 106. Alternatively or additionally a housing 102 of the rake assembly 100, which carries an instrumentation arm, may be rotatably mounted such that the housing 102 and instrumentation arm 120 are operable to rotate at least part of the way around the longitudinal axis 130. Alternatively or additionally the rake assembly 100 may comprise a flow body unit 600 configured to control air flow paths through the rig which reduces flow blockage through the rake assembly 100.

Although the apparatus and methods of the present disclosure relate to rigs which are smaller in size than the full size equipment they model, they may equally be applied to full size configurations. That is to say, the apparatus and method of the present disclosure may be incorporated in full size development rigs and/or production engines.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A flow body unit (600) for a fluid flow rig (10) for simulating fluid flow patterns; the flow body unit (600) comprising:
a flow body support frame (700);
a core member (800) extending from the flow body support frame (700) along a flow body unit longitudinal axis (630);
the core member (800) having a leading edge end (822) and a trailing edge end (824), the core member (800) mounted to the flow body support frame (700) at its trailing edge end (824) such that it extends away from the flow body support frame (700) to terminate at a free end (834) defined by the leading edge end (822).

2. . A flow body unit (600) as claimed in claim 1 wherein, in the direction from the core member leading edge end (822) to the core member trailing edge end (824) :
a first region (830) of the flow body increases in diameter from a point at the core member leading edge end (822) to a second region (832);
the second region (832) extends towards the core member trailing edge end (824) to a third region (834), the second region (832) increasing in diameter at a gradually reducing rate as the distance from the core member leading edge end (822) increases;
the third region (834) extends towards the core member trailing edge end (824) to a fourth region (836), the third region (834) reducing in diameter as the distance from the core member leading edge end (822) increases;
the fourth region (836) extends towards the core member trailing edge end (824) to a fifth region (838), the fourth region (836) having a constant diameter as the distance from the core member leading edge end (822) increases;
the fifth region (838) extends towards the core member trailing edge end (824) to a sixth region (840), the fifth region (840) increasing in diameter at a gradually reducing rate as the distance from the core member leading edge end (822) increases;
the sixth region (840) extends towards the core member trailing edge end (824), the sixth region (840) reducing in diameter as the distance from the core member leading edge end (822) increases.

3. A flow body unit (600) as claimed in claim 1 or claim 2 wherein the flow body support frame (700) comprises:
a base member (710) configured to be mounted to a housing (102);
the base member (710) defining an aperture (712) centred on the flow body unit longitudinal axis (630)
the core member (800) centred on, and extending along, the flow body unit longitudinal axis (630)
a strut (714) extending from the base member (710) to the core member (800).

4. A flow body unit (600) as claimed in claim 3 wherein a plurality of struts (714) extend from the base member (710) to the core member (800);
the struts (714) being spaced apart from one another around the flow body unit longitudinal axis (630) to define a flow passages (730) between the struts (714).

5. A flow body unit (600) as claimed in claim 3 or claim 4 wherein the/each strut (714) comprises an aerofoil profile (716).

6. A rake assembly (100) for measuring fluid flow parameters in a fluid flow rig (10), the rake assembly (100) comprising: a housing (102) comprising a wall (104) which defines a flow passage (110), with a flow inlet (112) and a flow outlet (114), the flow passage (110) extending from the flow inlet (112) to the flow outlet (114); wherein the housing wall (104) defines an access aperture (106);
an instrumentation arm (120) which extends from a leading edge end (122) to a trailing edge end (124) and configured to be removably mounted to the housing (102);
wherein the instrumentation arm (120) is operable such that, when mounted to the housing wall (104) the instrumentation arm (120) extends through the access aperture (106) to extend at least part of the way across the flow passage (110);
and further comprising a flow body unit (600) of claims 1 to 5 mounted to the housing (102) such that the flow body unit longitudinal axis (630) is aligned with the housing longitudinal axis (130), and
such that the first region (830) of the core member (800) is provided upstream of the leading edge end (122) of the instrumentation arm (120).
